# EUROPÄISCHE PATENTSCHRIFT

(11) **EP 1 523 516 B1**
(45) Veröffentlichungstag und Bekanntmachung des Hinweises auf die Patenterteilung: **07.06.2006**
(21) Anmeldenummer: 03765064.5
(22) Anmeldetag: 21.07.2003
(51) Int. Cl.: C08J 7/04

(54) **BEHÄLTERFÖRMIGE VERPACKUNGEN**
CONTAINER-SHAPED PACKAGE
EMBALLAGES EN FORME DE CONTENANTS

(30) Priorität: 22.07.2002 DE 20211075 U
(43) Veröffentlichungstag der Anmeldung: 20.04.2005
(73) Patentinhaber: RPC Bramlage GmbH, 49393 Lohne (DE)
(72) Erfinder: BÖCKMANN, Alfons, 49413 Dinklage (DE); SEYDA, Daniel, 49393 Lohne (DE)
(74) Vertreter: Mey, Klaus-Peter
(86) Internationale Anmeldenummer: PCT/EP2003/007921
(87) Internationale Veröffentlichungsnummer: WO 2004/009685

(56) Entgegenhaltungen:
- EP-A- 0 814 114
- WO-A-00/49072
- GB-A- 2 337 470
- US-A- 3 637 418
- US-A- 4 632 053

## Beschreibung

Die Erfindung betrifft Kunststoffbehälter, insbesondere aus Styrol und/oder Polyolefinen, zur Verpackung und Aufbewahrung von Produkten aus dem Lebensmittelbereich über einen längeren Zeitraum wie beispielsweise Salate, Fruchtextrakte, Getränke in Portionsbehältern für Getränkeautomaten im Einwegbereich, Zahncreme, wie sie sich allgemein im Handel befinden und bekannt sind.

Bei den z. Zt. im Markt befindlichen behälterförmigen Verpackungen aus Styrol und/oder Polyolefinen besteht das Problem, dass die Barriereeigenschaften gegenüber Sauerstoff nicht ausreichend hoch sind, so dass dieser durch Diffusion von außen in die geschlossenen Kunststoffbehälter gelangen kann. Durch das langsame Eindringen von Sauerstoff in den Kunststoffbehälter wird die Haltbarkeit der Inhaltstoffe negativ beeinflusst und eine längere Lagerzeit verhindert.

Um unerwünschtes Eindringen von Sauerstoff oder von Kohlendioxid in Kunststoffbehälter, insbesondere in kohlensäurehaltige Getränke aufbewahrende Behälter zu unterbinden, wird in der WO 00 49072 A vorgeschlagen, auf der äußeren und/oder inneren Behälteroberfläche eine zweischichtige Laminatschicht aufzubringen, die aus vom Behältermaterial abweichenden Materialien besteht. Die innere Schicht mit einer Schichtdicke im Bereich von 20 µm besteht aus einem wasserlöslichen oder in Wasser dispergierbaren Bindemittel mit einem Gehalt von 10 bis 90 Gewichtsprozent eines plättchenförmigen Minerals wie beispielsweise das Tonmineral Montmorillonit. Auf diese innere erste Schicht ist dann eine äußere zweite polymere Schicht in Form einer organischen Lösung mit einer Schichtdicke von ≤ 12 µm aufgetragen.

Ausgehend von diesem Stand der Technik ist es Aufgabe der Erfindung, mit einfachen Mitteln die Barriereeigenschaften des Behältermaterials gegenüber Sauerstoff zu verbessern, ohne das Behältermaterial selbst maßgeblich zu verändern.

Die gestellte Aufgabe wird mit den kennzeichnenden Merkmalen des Anspruchs 1 dadurch gelöst, dass zur Verminderung eines Sauerstoffeintrags in dem verschlossenen Kunststoffbehälter die äußere und/oder innere Behälteroberfläche mit einer Lackschicht mit Barriereeigenschaften gegenüber Sauerstoff beschichtet ist, die bezüglich ihrer Eigenschaften, beispielsweise mechanische Festigkeit, thermische Ausdehnung, chemische Resistenz gegenüber den Behälterinhaltstoffen, weitgehend an das Behältermaterial und gegebenenfalls an die Behälterinhaltstoffe angepasst ist, wobei die zur Beschichtung verwendeten Lacke moderne Epoxydharze oder Amin-Addukte zur Basis haben.

Vorteilhafte Ausgestaltungen der Erfindung sind in den Unteransprüchen angegeben.

Durch den Überzug der Behälteroberfläche mit einer Lackschicht mit Barriereeigenschaften gegenüber Sauerstoff wird das Eindringen von Sauerstoff in den verschlossenen Kunststoffbehälter erschwert und die Lagerzeit dadurch erheblich verlängert. Hierzu ist es in vielen Fällen ausreichend, nur die Außenoberfläche des Kunststoffbehälters mit dem Lack zu beschichten. Je nach dem angewendeten Verfahren der Beschichtung, die eine Sprüh- oder Tauchbeschichtung sein kann, kann es aber aus verfahrenstechnischen Gründen auch kostengünstiger sein, die gesamte frei zugängliche Oberfläche des Kunststoffbehälters in einem Arbeitsgang zu beschichten, wenn eine Verträglichkeit des Behälterinhalts mit dem Beschichtungslack gegeben ist. Der Lack muss in diesem Fall gegenüber den Behälterinhaltsstoffen chemisch resistent sein.

Üblicherweise werden Beschichtungslacke mit modernen Epoxydharzen oder Amin-Addukte als Basis verwendet und die Lackschicht in Form einer Monoschicht hergestellt. Es ist aber je nach Bedarfsfall auch möglich, mehrere Schichten übereinander zu legen. Obwohl eine derartig aufgebaute Barriere- oder Sperrschicht in ihrer Fertigung aufwendiger ist als eine Monoschicht, ist es dann aber möglich, einzelne Schichten aus unterschiedlichen Materialien aufzubauen, wobei auch eine durch Metallisieren hergestellte Schicht mit enthalten sein kann.

Je nach Herstellungsverfahren, verwendete Materialien und Schichtaufbau beträgt die Dicke der gebrauchsfertigen Beschichtung variabel etwa 0,003 µm bis 0,03 µm, vorzugsweise zwischen 0,007 µm und 0,01 µm.

Damit der Lack beim Gebrauch des Kunststoffbehälters als vollständige Beschichtung erhalten bleibt und beispielsweise nicht "abblättert", muss eine ausreichend feste Haftung des Beschichtungslacks auf der zu beschichtenden Behälteroberfläche gegeben sein. Um eine derartige Haftung sicherzustellen, wird die Behälteroberfläche vor ihrer Beschichtung vorbehandelt, so dass sie dann beispielsweise fett- und/oder staubfrei und/oder aufgeraut ist.

Je nach verwendetem Lacktyp kann es aus Gründen der Eigenschaftsverbesserung der Lackschicht bezüglich ihrer Haftung auf der Behälteroberfläche, Verträglichkeit mit den Inhaltstoffen, mechanischen Festigkeit erforderlich sein, die Lackschicht nach ihrem Auftrag auf die Behälteroberfläche beispielsweise zur Trocknung bzw. Aushärtung nachzubehandeln. Diese Nachbehandlung kann dann beispielsweise durch Wärmezufuhr und/oder UV-Bestrahlung erfolgen.

Die gebrauchsfertige auf die Behälteroberfläche aufgetragene Lackschicht, mit oder ohne Nachbehandlung, zeichnet sich dadurch aus, dass sie bezüglich ihrer Eigenschaften, beispielsweise mechanische Festigkeit, thermische Ausdehnung, chemische Resistenz weitgehend an das Behältermaterial und gegebenenfalls an die Behälterinhaltsstoffe angepasst ist.

Nachfolgend wird die Erfindung an zwei Ausführungsbeispielen näher erläutert.

Es zeigen:
- Fig. 1: einen mit einer Folie verschlossenen Kunststoffbehälter in einer Draufsicht,
- Fig. 2: den Kunststoffbehälter der Fig. 1 in einer Seitenansicht,
- Fig. 3: den Kunststoffbehälter der Fig. 1 in einem Vertikalschnitt um 90° gedreht,
- Fig. 4: einen mit einem Deckel verschlossenen Kunststoffbehälter in einer Seitenansicht,
- Fig. 5: den Kunststoffbehälter der Fig. 4 in einem Vertikalschnitt.

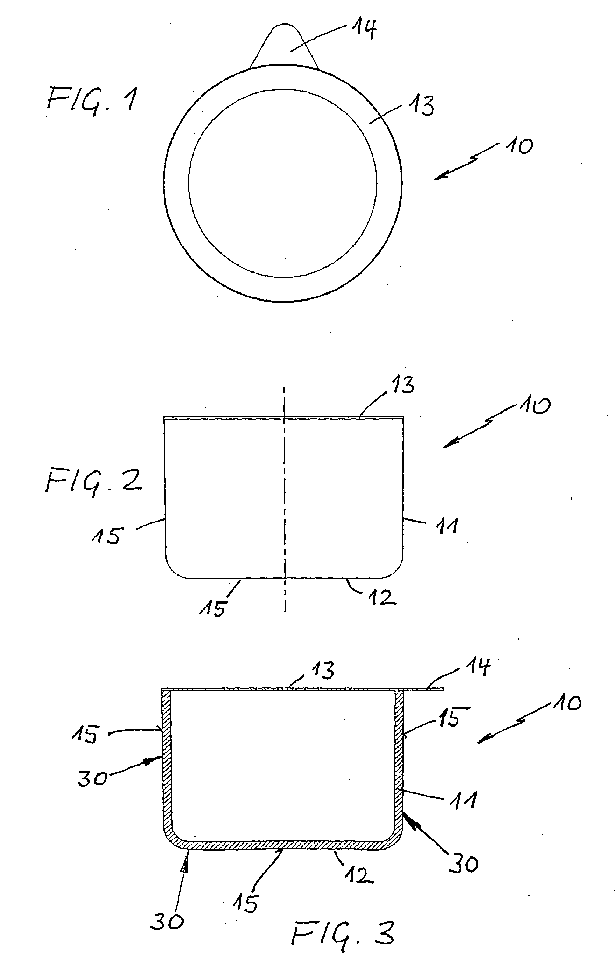

In den Figuren 1, 2 und 3 ist in einer Draufsicht (Fig.1), einer Seitenansicht (Fig. 2) und einem Vertikalschnitt (Fig. 3) ein Kunststoffbehälter 10 mit rundem Querschnitt dargestellt. Der Kunststoffbehälter 10 ist hier tassenförmig mit einem flachen Boden 12 und einer senkrecht zum Boden 12 verlaufenden Seitenwand 11 ausgebildet und mit einer Folie 13 mit Aufreißlasche 14 verschlossen. Dieser Kunststoffbehälter 10, der beispielsweise zur Aufbewahrung eines Getränks verwendet werden kann, ist erfindungsgemäß an seiner gesamten äußeren Oberfläche 15 mit einer Lackschicht 30 mit Barriereeigenschaften gegenüber Sauerstoff beschichtet. - Wegen der sehr geringen Dicke dieser Lackschicht 30 ist eine direkte Darstellung dieser Lackschicht 30 nicht möglich, weshalb lediglich mit Bezugspfeilen 30 auf den Ort einer erfolgten Beschichtung verwiesen ist. - Die Verschlussfolie 13 ist nicht beschichtet, da diese in diesem Ausführungsbeispiel bereits aus einem Material mit ausreichenden Barriere- bzw. Sperreigenschaften gegenüber Sauerstoff besteht.

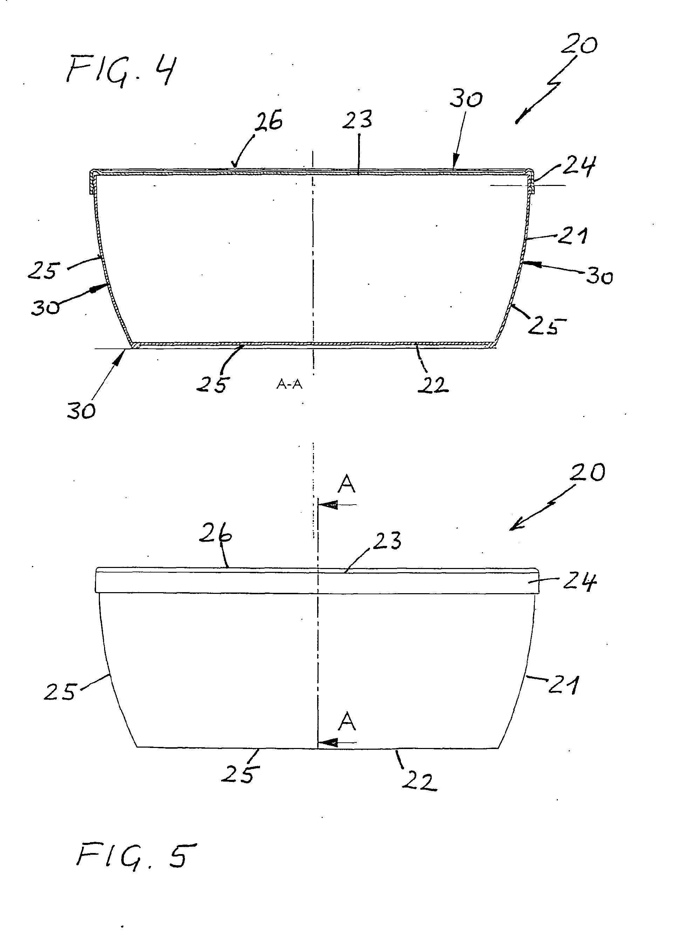

In den Figuren 4 und 5 ist in einer Seitenansicht (Fig. 4) und einem Vertikalschnitt (Fig. 5) ein anderer Kunststoffbehälter 20 mit rundem Querschnitt in einer weiteren Ausbildungsform dargestellt. Der Kunststoffbehälter 20 ist becherförmig mit einem flachen Boden 22 und bogenförmig verlaufender Seitenwand 21 mit vom Boden 22 weg sich vergrößerndem Querschnitt ausgebildet. Der Kunststoffbehälter 20 ist mit einem Deckel 23 verschlossen, wobei der Deckelrand 24 das obere Ende der Seitenwand 21 umgreift.

Auch der Kunststoffbehälter 20, der beispielsweise zur Aufbewahrung von Salaten verwendet wird, ist an seiner gesamten äußeren Oberfläche 25 mit einer Lackschicht 30 mit Barriereeigenschaften gegenüber Sauerstoff beschichtet. Der Behälterdeckel 23, der in diesem Ausführungsbeispiel aus dem gleichen Material wie der Kunststoffbehälter 20 gefertigt ist, ist gleichfalls an seiner Außenseite 26 mit der Lackschicht 30 versehen, so dass das Eindringen von Sauerstoff in den verschlossenen Kunststoffbehälter 20 durch eine rundum vorhandene Lackschicht 30 erschwert wird.

Die Erfindung ist nicht auf die dargestellten Anwendungsbeispiele beschränkt, sondern weitgehend auf alle solche Behälter auch mit unterschiedlichster Gestaltung anwendbar, deren Inhaltstoffe gegenüber dem Eindringen von Sauerstoff bei längerer Lagerung geschützt werden sollen.

### Bezugszeichenliste

- 10, 20: Kunststoffbehälter
- 11,21: Seitenwand
- 12,22: flacher Boden
- 13: Verschlussfolie
- 14: Aufreißlasche
- 15, 25: Oberfläche
- 23: Behälterdeckel
- 24: Deckelrand
- 26: Außenseite von 23
- 30: Lackschicht

## Patentansprüche

1. Kunststoffbehälter (10, 20) aus Styrol und/oder Polyolefinen zur Verpackung und Aufbewahrung von Produkten aus dem Lebensmittelbereich über einen längeren Zeitraum wie beispielsweise Salate, Fruchtextrakte, Getränke in Portionsbehältern für Getränkeautomaten im Einwegbereich, Zahncreme, wobei zur Verminderung eines Sauerstoffeintrags in den verschlossenen Kunststoffbehälter (10, 20) dieser mit einer die Sauerstoffdiffusion behindernden Schicht versehen ist, **dadurch gekennzeichnet, dass** die äußere und/oder die innere Behälteroberfläche (15, 25) mit einer Lackschicht (30) mit Barriereeigenschaften gegenüber Sauerstoff beschichtet ist, die bezüglich ihrer Eigenschaften, beispielsweise mechanische Festigkeit, thermische Ausdehnung, chemische Resistenz gegenüber den Behälterinhaltstoffen, weitgehend an das Behältermaterial und gegebenenfalls an die Behälterinhaltstoffe angepasst ist, wobei die zur Beschichtung verwendeten Lacke moderne Epoxydharze oder Amin-Addukte zur Basis haben.

2. Kunststoffbehälter (10, 20) nach Anspruch 1, **dadurch gekennzeichnet, dass** die Lackbeschichtung (30) eine Sprühbeschichtung und/oder eine Tauchbeschichtung nur der Außenoberfläche oder der gesamten frei zugänglichen Oberfläche des Kunststoffbehälters (10, 20) in einem Arbeitsgang ist.

3. Kunststoffbehälter (10, 20) nach Anspruch 1 oder 2, **dadurch gekennzeichnet, dass** die Lackschicht (30) aus mindestens zwei übereinander gelegten Einzelschichten aufgebaut ist.

4. Kunststoffbehälter (10, 20) nach Anspruch 3, **dadurch gekennzeichnet, dass** die Einzelschichten aus unterschiedlichen Materialien bestehen.

5. Kunststoffbehälter (10, 20) nach Anspruch 3 oder 4, **dadurch gekennzeichnet, dass** eine der Einzelschichten eine durch Metallisieren hergestellte Schicht ist.

6. Kunststoffbehälter (10, 20) nach Anspruch 1, 2, 3, 4 oder 5, **dadurch gekennzeichnet, dass** die Lackschicht (30) nach ihrem Auftrag auf die Behälteroberfläche (15, 25) durch Wärmezufuhr und/oder UV-Bestrahlung zur Trocknung oder Aushärtung nachbehandelt ist.

7. Kunststoffbehälter (10, 20) nach einem oder mehreren der Ansprüche 1 bis 6, **dadurch gekennzeichnet, dass** die Dicke der gebrauchsfertigen Lackschicht (30) variabel etwa 0,003 µm bis 0,03 µm beträgt.

8. Kunststoffbehälter (10,20) nach einem oder mehreren der Ansprüche 1 bis 7, **dadurch gekennzeichnet, dass** die zu beschichtende Behälteroberfläche (15, 25) vor ihrer Beschichtung durch eine Beflammung vorbehandelt und/oder fett- und/oder staubfrei und/oder aufgeraut ist.

## Claims

1. Plastics material container (10, 20) of styrol and/or polyolefines for packaging and storage of products from the field of foodstuffs over a longer period of time, such as, for example, salads, fruit extracts, beverages in portion containers for beverage dispensing machines in the field of disposables, toothpaste, wherein for avoidance of oxygen inclusion in the closed plastics material container (10, 20) this is provided with a coating inhibiting diffusion of oxygen, **characterised in that** the outer and/or inner container surface (15, 25) is coated with a lacquer coating (30) with barrier properties relative to oxygen, which is adapted with respect to its characteristics, for example mechanical strength, thermal expansion and chemical resistance to the container contents, substantially to the container material and optionally to the container contents, wherein the lacquers used for the coating have modern epoxy resins or amine adducts as the base.

2. Plastics material container (10, 20) according to claim 1, **characterised in that** the lacquer coating (30) is a spray coating and/or a dip coating of only the outer surface or of the entire freely accessible surface of the plastics material container (10, 20) in one working step.

3. Plastics material container (10, 20) according to claim 1 or 2, **characterised in that** the lacquer coating (30) is formed from at least two individual coatings laid one over the other.

4. Plastics material container (10, 20) according to claim 3, **characterised in that** the individual coatings consist of different materials.

5. Plastics material container (10, 20) according to claim 3 or 4, **characterised in that** one of the individual coatings is a coating produced by metallisation.

6. Plastics material container (10, 20) according to claim 1, 2, 3, 4 or 5, **characterised in that** the lacquer coating (30) after application thereof to the container surface (15, 25) is subsequently treated by supply of heat and/or ultraviolet radiation for drying or hardening.

7. Plastics material container (10, 20) according to one or more of claims 1 to 6, **characterised in that** the thickness of the lacquer coating (30) in the finished-for-use state varies between approximately 0.003 microns to 0.03 microns.

8. Plastics material container (10, 20) according to one or more of claims 1 to 7, **characterised in that** the container surface (15, 25) to be coated is prior to coating thereof pretreated by flaming and/or is fat-free and/or dust-free and/or is roughened.

## Revendications

1. Récipient (10, 20) en matière plastique, en styrène et/ou en polyoléfines, pour emballer et conserver des produits du domaine alimentaire pendant une période prolongée, tels que par exemple des salades, des extraits de fruits, des boissons dans des récipients à portions à usage unique destinés aux distributeurs de boissons, des pâtes dentifrices, pour diminuer une pénétration d'oxygène dans le récipient en matière plastique (10, 20) fermé, celui-ci étant muni d'une couche empêchant la diffusion d'oxygène,
**caractérisé en ce que**
la surface de récipient extérieure et/ou intérieure (15, 25) est revêtue d'une couche de vernis (30) ayant des propriétés de barrière par rapport à l'oxygène et qui, concernant ses propriétés, par exemple la résistance mécanique, la dilatation thermique et la résistance chimique par rapport au contenu du récipient, est largement adaptée au matériau de récipient et le cas échéant au contenu du récipient, les vernis utilisés pour le revêtement étant à base de résines époxy modernes ou d'additifs d'amine.

2. Récipient en matière plastique (10, 20) selon la revendication 1,
**caractérisé en ce que**
la couche de vernis (30) est un revêtement par pulvérisation et/ou par immersion uniquement de la surface extérieure ou de toute la surface librement accessible du récipient en matière plastique (10, 20), réalisé en une seule opération.

3. Récipient en matière plastique (10, 20) selon la revendication 1 ou 2,
**caractérisé en ce que**
la couche de vernis (30) est composée d'au moins deux couches individuelles superposées.

4. Récipient en matière plastique (1à, 20), selon la revendication 3,
**caractérisé en ce que**
les couches individuelles sont en différents matériaux.

5. Récipient en matière plastique (10, 20) selon la revendication 3 ou 4,
**caractérisé en ce que**
l'une des couches individuelles est une couche obtenue par métallisation.

6. Récipient en matière plastique (10, 20) selon la revendication 1, 2, 3, 4 ou 5,
**caractérisé en ce qu'**
après son application sur la surface de récipient (15, 25) la couche de vernis (30) subit un post-traitement par apport de chaleur et/ou exposition aux rayons UV pour sécher ou durcir.

7. Récipient en matière plastique (10, 20) selon une ou plusieurs des revendications 1 à 6,
**caractérisé en ce que**
l'épaisseur de la couche de vernis (30) prête à l'emploi est variable entre 0,003 µm et 0,03 µm environ.

8. Récipient en matière plastique (10, 20) selon une ou plusieurs des revendications 1 à 7,
**caractérisé en ce qu'**
avant son revêtement, la surface de récipient (15, 25) à revêtir subit un prétraitement de flambage et/ou est dégraissée et/ou dépoussiérée et/ou rendue rugueuse.
